Europäisches Patentamt

European Patent Office

Office européen des brevets

(19)

(11) **EP 1 209 659 B1**

(12) **EUROPEAN PATENT SPECIFICATION**

(45) Date of publication and mention
of the grant of the patent:
**05.10.2005 Bulletin 2005/40**

(51) Int Cl.⁷: **G10L 15/18**, G06K 9/72,
G10L 15/26

(21) Application number: **01126554.3**

(22) Date of filing: **15.11.2001**

(54) **Method and apparatus for text input utilizing speech recognition**

Verfahren und Vorrichtung zur Texteingabe durch Spracherkennung

Méthode et appareil d'entrée de texte à l'aide de reconnaissance de la parole

(84) Designated Contracting States:
**DE FR GB**

(30) Priority: **22.11.2000 JP 2000355416**

(43) Date of publication of application:
**29.05.2002 Bulletin 2002/22**

(73) Proprietor: **MATSUSHITA ELECTRIC INDUSTRIAL CO., LTD.**
**Kadoma-shi, Osaka 571-8501 (JP)**

(72) Inventors:
• **Endo, Mitsuru**
**Kawasaki-shi, Kanagawa 216-0015 (JP)**
• **Nishizaki, Makoto**
**Musashino-shi, Tokyo 180-0013 (JP)**
• **Saito, Natsuki**
**Matsudo-shi, Chiba 270-0023 (JP)**

(74) Representative: **Balsters, Robert et al**
**Novagraaf SA**
**25, Avenue du Pailly**
**1220 Les Avanchets - Geneva (CH)**

(56) References cited:
**WO-A-96/03741**

• **YAMADA T ET AL: "Japanese dictation system using character source modeling" DIGITAL SIGNAL PROCESSING 2, ESTIMATION, VLSI. SAN FRANCISCO, MAR. 23 - 26, 1992, PROCEEDINGS OF THE INTERNATIONAL CONFERENCE ON ACOUSTICS, SPEECH AND SIGNAL PROCESSING (ICASSP), NEW YORK, IEEE, US, vol. 5 CONF. 17, 23 March 1992 (1992-03-23), pages 37-40, XP010058722 ISBN: 0-7803-0532-9**
• **PATENT ABSTRACTS OF JAPAN vol. 015, no. 083 (P-1171), 26 February 1991 (1991-02-26) & JP 02 298997 A (SHARP CORP), 11 December 1990 (1990-12-11)**

**Description**

**FIELD OF THE INVENTION**

The present invention relates to a method for text input utilizing speech recognition, and more particularly, relates to a method and apparatus for text input on a small-sized appliance, such as a cellular telephone.

**BACKGROUND OF THE INVENTION**

Conventionally, the methods for text input utilizing speech recognition include a method the speaker speaks an utterance based on a word or minimum phrase in order for utterance-based speech recognition utterance by utterance and a method utterance is spoken based on one sentence or more in order for speech recognition, at one time.

In the former, after the utterance spoken by the speaker, a predetermined number of candidates are menu-displayed from which the speaker is allowed for selection, as described in JP-A-2-298997. This method, however, requires the speaker to utter with pauses phrase by phrase, each time of which a correct word must be selected. Thus, there has been a problem with troublesome input manipulation and time spending.

For the latter, there is known a disclosure, e.g., in "Word-based Approach to Large-vocabulary Continuous Speech Recognition for Japanese" (Information Processing Society of Japan Theses, Vol.40, No.4, pp1395-1403,Apr. 1999).

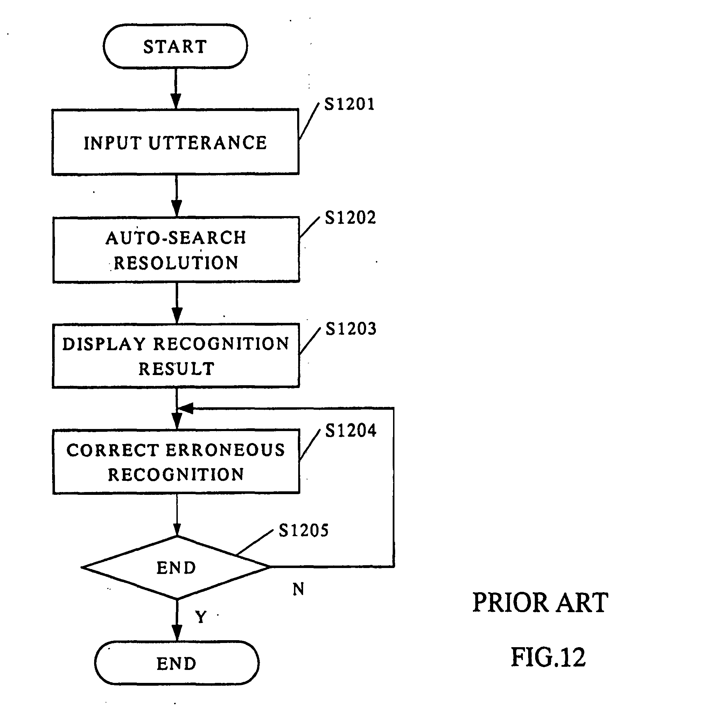

Fig. 12 shows an operation flowchart of the conventional text input method, the operation of which will be explained.

At first, a user inputs an utterance (S1201). Next, the apparatus automatically searches for a recognition result. In recognition-result search, the apparatus determines an acoustic score for the entire utterance while connecting between acoustic elements such as sound elements. Simultaneously, a language score is determined for a language-based sequence, such as a word. Then, the apparatus arranges the recognition results in the order of higher score in their integration. Usually, one utterance comprises a sentence including several to several tens of words. In order to output accurate recognition results, the apparatus during search is left with many word-string candidates taking account of combinations of word candidates (S1202).

Next, the apparatus displays word sequence ranked atop in the recognition-results order, for all the input utterances (S1203). Next, the user corrects the recognition result being displayed, in a part different from his or her intention (S1204). When all the corrections by the user are completed, the apparatus terminates the input operation concerning the one utterance (S1205).

In the conventional art, however, recognition-result candidates are corrected after recognition process has been made over the entire sentence. Accordingly, in the case of a long utterance or so, heavy burden is imposed over the recognition process, requiring increased storage capacity. Thus, there has been a problem with difficulty in apparatus size reduction.

It is an object of the present invention to realize a method for text input capable of reducing the apparatus size and continuously inputting an utterance of one sentence or more.

**SUMMARY OF THE INVENTION**

A method and apparatus for text input, according to the present invention as claimed in claims 1-19, for resolving the above problem, allows a user to carry out a search process on an utterance having been inputted on one sentence or more, to successively select and fix candidates word by word or phrase by phrase starting from the beginning of a sentence.

More specifically, a method and apparatus for inputting a text comprises a step of continuously inputting an utterance; a step of preparing word-string candidates based on one to several words, starting from a beginning of the inputted utterance; a step of displaying the candidates; and a step of selecting the displayed candidate by a user; whereby, for a next following utterance, the candidate preparing step, the displaying step and the selecting step are repeated in order on the basis of the selected candidate.

This eliminates the necessity to keep a memory space for search taking account of a number of word-string candidates, hence reducing greatly the storage capacity and decreasing speech-recognition process amount. This makes possible apparatus size reduction. Furthermore, because the user is allowed to input a continuous utterance based on one sentence or more, he or she is released from the troublesomeness as encountered in word-based input.

## EP 1 209 659 B1

**BRIEF DESCRIPTION OF THE DRAWINGS**

Fig. 1 is a block configuration diagram of a text input apparatus in accordance with a first exemplary embodiment of the present invention;

Fig. 2 shows a man-machine interface of the text input apparatus in accordance with the first exemplary embodiment of the invention;

Fig. 3 shows a flowchart illustrating the operation of the text input apparatus in accordance with the first exemplary embodiment of the invention;

Fig. 4 shows a flowchart of a procedure for a phrase candidate preparing process by the text input apparatus in accordance with the first exemplary embodiment of the invention;

Fig. 5 shows an example of the data of during an extension process by the text input apparatus in accordance with the first exemplary embodiment of the invention;

Fig. 6 shows an example of the data of during an acoustic score updating process by a text input method in accordance with the first exemplary embodiment of the invention;

Fig. 7 shows a flowchart of a procedure for a phrase candidate preparing process by a text input apparatus in accordance with a second exemplary embodiment of the invention;

Fig. 8 shows an example of the data of during the phrase candidate preparing process by the text input apparatus in accordance with the second exemplary embodiment of the invention;

Fig. 9 shows a flowchart of a procedure for a phrase candidate preparing process by a text input apparatus in accordance with a third exemplary embodiment of the invention;

Fig. 10 shows an example of the data of during the phrase candidate preparing process by the text input apparatus in accordance with the third exemplary embodiment of the invention;

Fig. 11 shows an example of the data of during a more-preferred phrase candidate preparing process by the text input apparatus in accordance with the third exemplary embodiment of the invention; and

Fig. 12 is a block configuration diagram of a conventional text input apparatus.

**DESCRIPTION OF THE PREFERRED EMBODIMENTS**

Exemplary embodiments of the present invention are demonstrated hereinafter with reference to the accompanying drawings.

1st Exemplary Embodiment

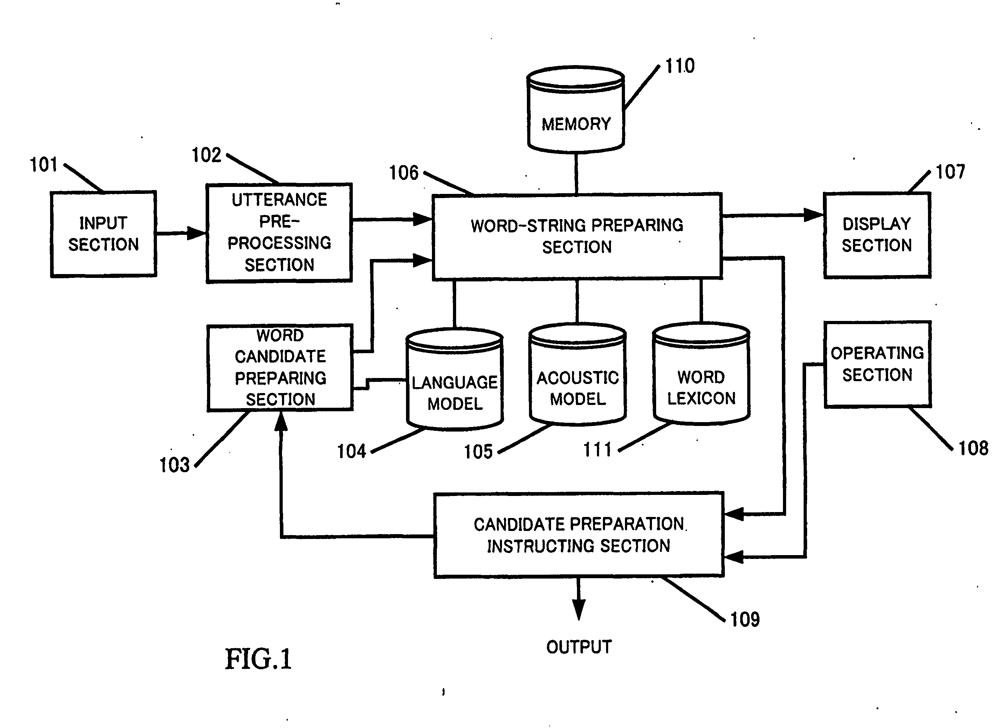

Fig. 1 is a block configuration diagram of a text input apparatus as one embodiment of the invention. In Fig. 1, the input utterance captured through an input section 101 is inputted to an utterance pre-processing section 102 where it is subjected to an A/D converting process, followed by acoustic features extracting process. A word-candidate preparing section 103 makes a predetermined number of word candidates following the phrases so far fixed referring to a language model 104. Herein, the language model 104 includes modeling of a relationship between words in a word sequence. In the case of the first utterance, a candidate-preparation instructing section 109 having received an instruction from an operating section 108 conveys an instruction concerning a sentence beginning to the candidate preparing section 103. Receiving this instruction, the candidate preparing section 103 makes the word candidates with high in probability to utter at a sentence beginning referring to a language model 104. The word candidates thus prepared are conveyed to a word-string preparing section 106.

On the other hand, the preparing section 106 receives acoustic features of an utterance having been spoken, sentence by sentence, from the processing section 102 and temporarily stores it to a memory 110. The preparing section 106 performs an extension process and an acoustic score updating process referring to an acoustic model 105 and word lexicon 111, on a word candidate from the candidate preparing section 103. Thus, prepared are a predetermined number of word strings as minimum-phrase candidates. The acoustic model 105 includes modeled acoustic features. The word lexicon 111 includes the entries of to-be-recognized words in the form of examples in phonetic symbols. Note that the extension process and the acoustic score updating process will be referred in detail later.

A display section 107 displays word-string candidates thus prepared. The user is allowed to select a correct phrase from among the candidates being displayed by the operating section 108. According to an instruction from the operating section 108, the candidate-preparation instructing section 109 receives a selected phrase from the word-string preparing section 106 and outputs it as a fixed phrase. Meanwhile, the instructing section 109 conveys the fixed phrase also to the candidate preparing section 103.

The word-candidate preparing section 103 receives the fixed phrase and prepares the following word candidate with reference to the language model 104, as referred before. The process as above is repeated until completing on one input sentence. After completion, the feature-amount data stored in the memory 110 is erased.

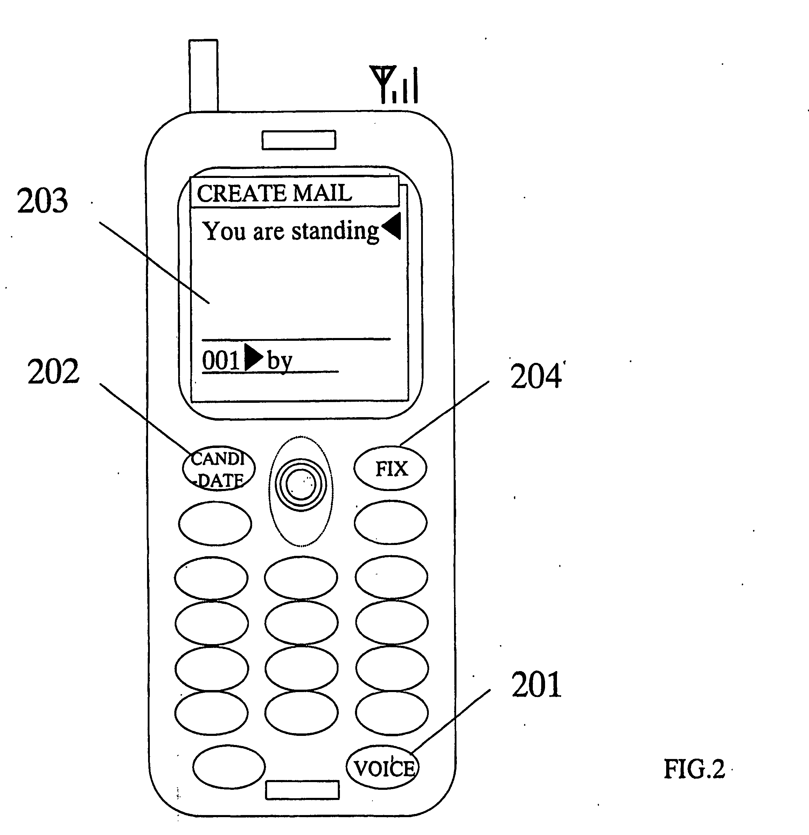

Fig. 2 is a view of a man-machine interface on a cellular telephone in the present embodiment. A VOICE button 201 is to notify a commencement of speech recognition. A CANDIDATE button 202 is to request for displaying or changing a phrase candidate. A display screen 203 is to display a fixed text or phrase candidate. A FIX button 204 is to fix a phrase candidate.

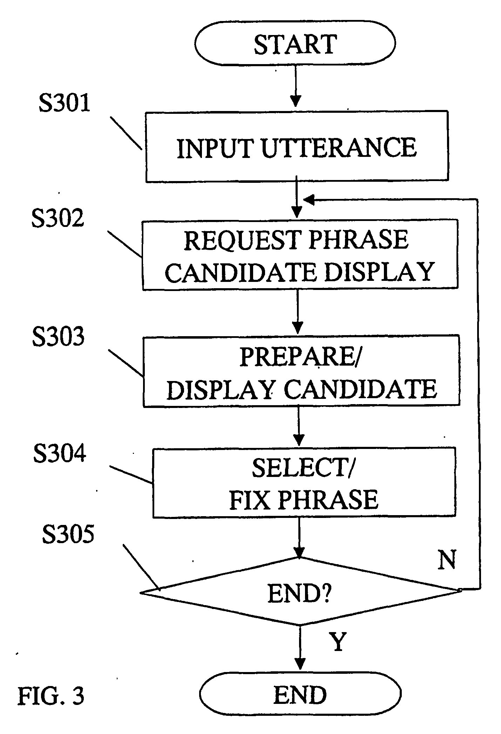

Fig. 3 shows a flowchart representing the outline of the operation by the text input apparatus of the invention. The operation of the invention will now be explained using Fig. 1 to Fig. 3.

At first, the user presses the VOICE button 201 and utters one sentence to input a spoken utterance. The text input apparatus performs an A/D-conversion process on the input utterance. Then, the apparatus carries out a feature extracting process, such as LPC cepstrum coefficients, on the converted utterance signal, frame by frame, at an interval, e.g., of 10 msec. (S301).

Then, the user presses the CANDIDATE button 202 to ask for a phrase-candidate display request (S302). The text input apparatus prepares a list of phrase candidates by using the acoustic features of input-utterance and acoustic and language models, and displays one or more upper-ranked candidates over the display screen 203 (S303).

The phrase-candidate list has word strings arranged in the order of higher integrated score, a sum of acoustic score and weighted language score. Herein, the acoustic score for a word string can be determined in the following way. The acoustic score, as(i, j) for an input frame i and lexicon frame j, can be computed by Formula (1).

$$as(i, j) = (\chi(i) - \mu(j))' \, \Sigma(j)^{-1}(\chi(i) - \mu(j)) + \log|\Sigma(j)| \tag{1}$$

where "t" is transposition, "-1" an inverse matrix, x(i) an input vector corresponding to the input frame i, and $\Sigma(j)$ and $\mu$(j) a covariance matrix and mean value vector of the feature vectors corresponding to the lexicon frame j. The foregoing acoustic model, concretely, comprises a set of covariance matrixes and mean value vectors of the lexicon frames. The input vector is a feature vector extracted with input utterance, such as the LPC cepstrum coefficients. The lexicon frame, similarly, is a feature vector extracted, from the acoustic model, with a word registered in a word lexicon considered corresponding to the input frame. Note that the feature amount data is not limited to an LPC cepstrum coefficients but MFCC (mel frequency cepstral coefficients) are usable.

The acoustic score for a word can be determined by a matching technique, such as DP matching, i.e. determining a correspondence relationship between an input frame and a lexicon frame and then adding together the acoustic scores existing on an optimal path connected with the correspondence relationship. Furthermore, the acoustic score for a word string can be determined by adding together word-based acoustic scores while taking account of the time alignment of between adjacent words.

Meanwhile, the language score for a word string can be determined in the following way.

The language model, concretely, is a set of linkage probabilities P(w(i) |pre(i,n)) that a word w(i) appear following the preceding words pre(i,n) in the number of n. The language score for a word string is to be obtained by making reference to a language model and determining a linkage probability or logarithm value thereof on each word while taking account of the preceding word, followed by adding them together.

In this manner, an acoustic score can be obtained from acoustic features of input-utterance and an acoustic model. A language score can be obtained from a word-string hypothesis and a language model. Integrating them, word strings high in score are registered as phrase candidates to the list.

Next, the user confirms a phrase candidate being displayed. If not a desired candidate, the CANDIDATE button 202 is pressed to display the next candidate. When a desired candidate is displayed, the user presses the FIX button 204 to fix the phrase (S304).

Fixing operation is pursued phrase by phrase. If phrase fixing is not done to the end of utterance, the process returns to step S302 thus completing the process at the end of the last fixed phrase (S305).

As in the foregoing, in the invention, after fixing a candidate by a user's phrase-candidate fixing operation, the following phrase candidate is prepared. Accordingly, there is no need to save the other candidates nor process them for recognition. This requires for the apparatus to satisfactorily have a reduced storage capacity, making possible to reduce the apparatus size.

Herein, consideration is given to the linguistic elements. The short element, such as a morpheme, even with less kinds, can enhance coverage hence being suited in apparatus-size reduction. However, as a block for selection by the user, the longer component such as a minimum phrase is easier to grasp and hence preferred. The invention employs the morpheme as the minimum linguistic element. Incidentally, the present embodiment provides an example that a short phrase is made up by properly connecting morphemes as is more preferred in interaction with the human. The make-up process is referred to as an extension process of morphemes.

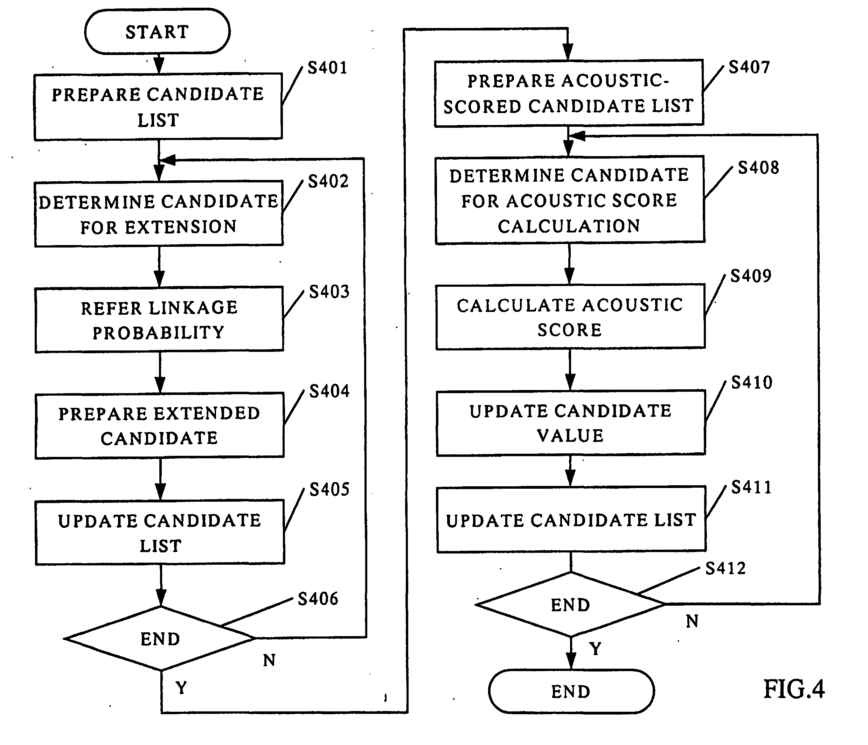

Explanation will be made in detail below on the phrase candidate preparing process to be implemented in the word-string preparing section 106, using Fig. 4 to Fig. 6.

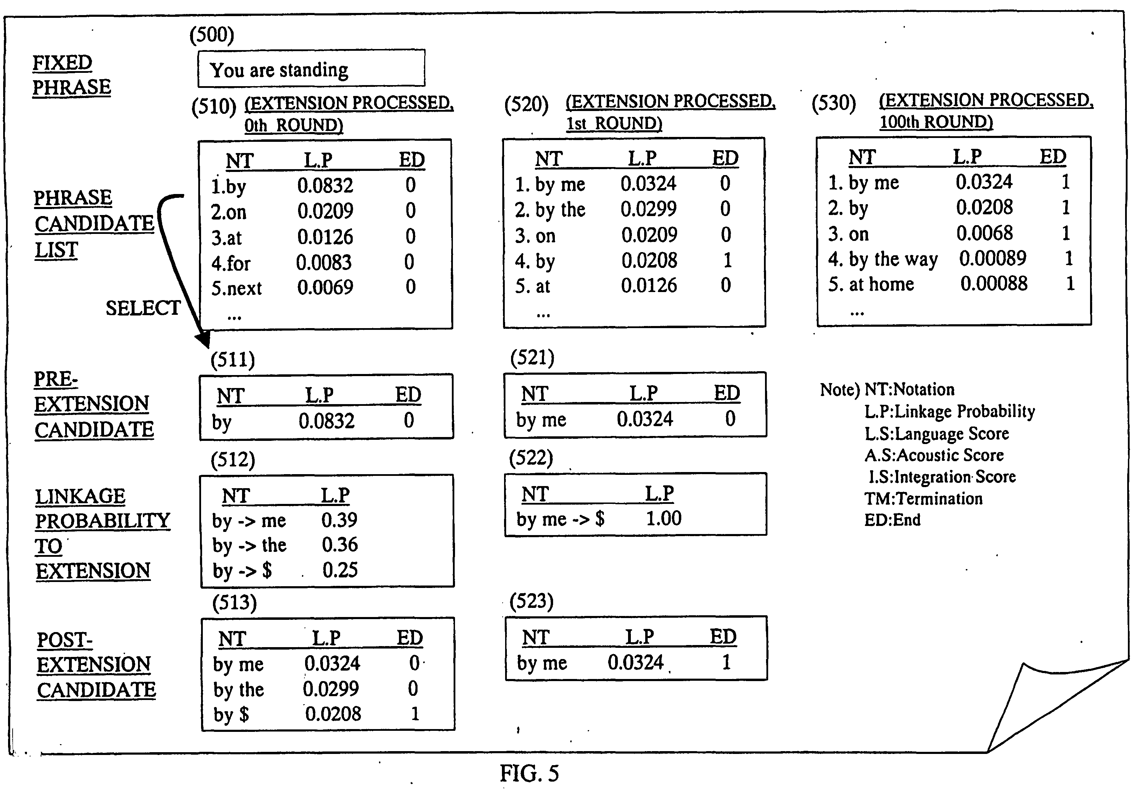

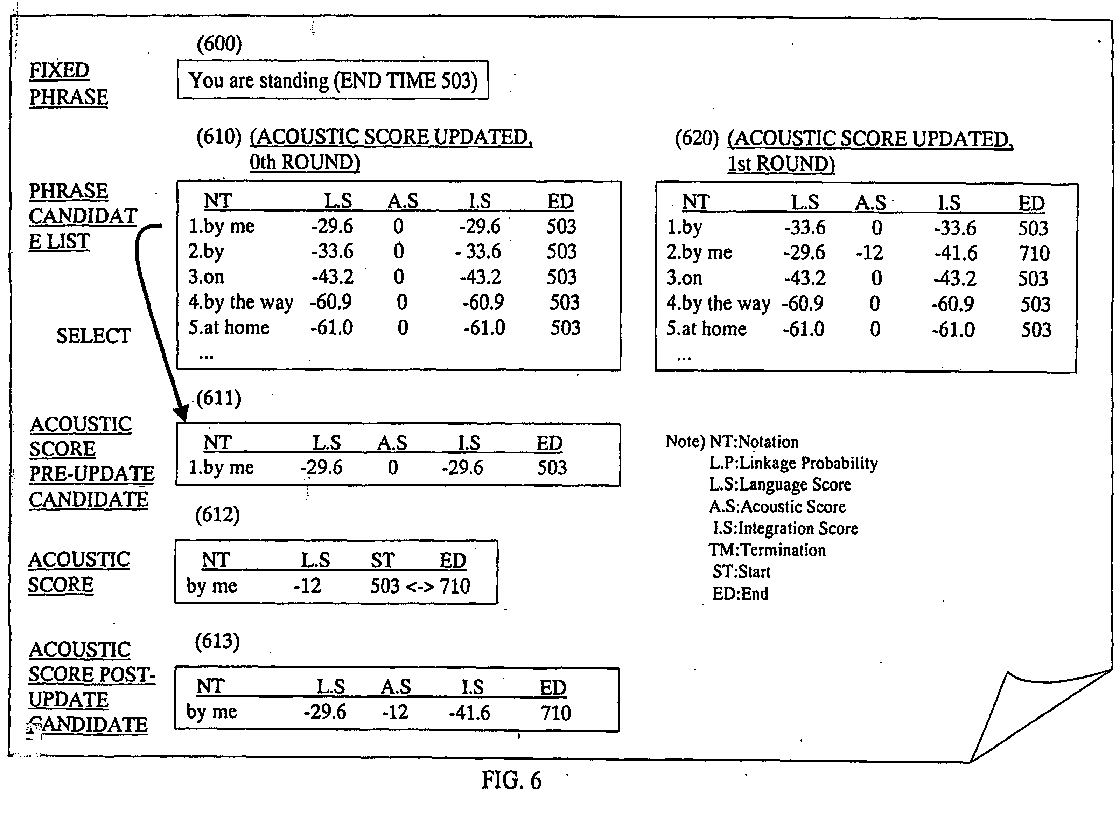

Fig. 4 is a flowchart showing a procedure of a phrase candidate preparing process according to the invention. In this embodiment, first a list of phrase candidates was prepared by extending morpheme-based candidates (S401 - S406). Next, a final phrase candidate list was prepared by taking consideration the acoustic score into the result of the above (S407 - S412). Fig. 5 is an example of the process data where by an extension process has been prepared a list of phrase candidates to be connected following a fixed phrase "You are standing" 500. Fig. 6 is an example of the process data where, after the extension process, a phrase candidate list was prepared through acoustic-score update.

In Fig. 5, first prepared is a list of phrase candidates 510 to be connected following the fixed phrase "You are standing" 500. This can be determined with a language model having previously learned on the linkage probabilities of "You are standing" to all the morphemes. The determined morpheme list is sorted in the order of higher linkage probability, thus obtaining a phrase candidate list 510. Each phrase candidate is given an initial value 0 as an extension end flag (shown END in the figure) representative of the possibility to extend from now on (S401). This extension end flag, when not to extend, is set with '1'. In this state, the phrase candidate is too short to understand. Consequently, the word-string preparing section 106 searches for those having high linkage probability of between that phrase candidate and the following morpheme, thereby preparing longer phrase candidates.

For this reason, the word-string preparing section 106 first determines phrase candidates for extension. From the top of the list, reference is made to the phrase candidates to select a first phrase candidate having an extension end flag '0' (S402). The selected candidates are as those in a list 511.

Next, the word-string preparing section 106 determines a linkage probability of between a phrase candidate for extension and each morpheme to be connected to that candidate. Herein, the morphemes smaller in linkage probability than a predetermined threshold or the morphemes smaller in linkage probability than the linkage probability to the punctuation mark, and the punctuation marks are gathered into one as "the other morphemes", to determine a sum of the linkage probabilities of them. The linkage probability is given a linkage probability on "the other morphemes" (S403). The determined linkage probability is as in a list 512, wherein the probability of other than "me" and "the" that are comparatively great in linkage probability from "by" are gathered as "($)". In the figure, the mark '$' is used correspondingly to the concept "the other morphemes" . However, the mark $ is omitted in the list 510, 520 and 530 which show the extension end flag (END). (This is similar to Figs. 6, 8, 10 and 11 to be hereinafter referred.)

Next, extension candidates are prepared. The linkage probability on "You are standing" → "by" is multiplied by a linkage probability on "by" → "me", to provide a linkage probability on "You are standing" → "by me". The phrase candidate "by" is considered extended into "by me". Similarly, the word-string preparing section 106 prepares an extension candidate "by the". The gathering as "the other morphemes" has many branches to the following morphemes. Namely, this is suited as a phrase boundary. Consequently, the word-string preparing section 106 considers that extension has ended for "the other morphemes". Accordingly, "by" is left as it is, to multiply the probabilities of "You are standing" → "by" and "by" → "($)", thereby providing a linkage probability. Also, the extension end flag is set to '1' (S404). As a result, prepared is a list of extended candidates 513. This completes a first round of extension process.

Next, the word-string preparing section 106 updates the phrase candidate list. Namely, the word-string preparing section 106 excludes pre-extension candidate 511 from the phrase candidate list 510. Then, the word-string preparing section 106 adds the post-extension candidates 513 and rearrange them according to the higher order of linkage probability (S405). This resultingly obtained a list of updated phrase candidates 520.

Then, the word-string preparing section 106 carries out an end determination. In this embodiment, ending was after completing a 100th round of extension processes that is a previously set number of times (S406). When the extension process is in less than the 100th round, it is considered not ending and the process returns to S402. By thus continuing the extension process, candidates of "by me", "by the way", "at home", etc. were obtained properly in phrase length as given in a phrase candidate list 530.

Incidentally, the end determination can end the process when the number of phrase candidates the extension end flag is set at '1' reaches a predetermined value as counted from the top-ranked linkage probability. Otherwise, it is possible to end the process at a time that there exists no phrase candidate having an extension end flag '0' having a greater linkage probability than the linkage probability of "the other morphemes".

Next, explanation will be made on a phrase candidate list preparing method wherein ordering is made by taking account of acoustic scores.

In Fig. 6, the fixed phrase "You are standing (end time 503)" 600 shows that, in step S301, the time of terminating (end time of) the utterance "You are standing" has been 503 ms as measured from a beginning time of pressing the VOICE button 201.

At first, a language score is determined by logarithmically processing the linkage probability on the basis of a phrase candidate list 530 prepared through 100 rounds of extension processes. In this embodiment, a language score was determined from the linkage probability by Formula (2).

$$L = 20 \log_{10} I \qquad\qquad (2)$$

where L is a language score and I a linkage probability.

The initial value of an acoustic score was set at a properly high value (herein, 0.00). Meanwhile, the language score and the acoustic score were summed up into an integration score. Then, the word-string preparing section 106 sorted a phrase candidate list in the order of higher integration score, thereby determining a list 610. Meanwhile, for an utterance end time to be obtained by acoustic matching, a fixed-phrase end time 503 was set as an initial value to each candidate (S407).

Next, the word-string preparing section 106 determined a candidate for updating an acoustic score value. Namely, reference was made to the phrase candidates in the order of from a top ranking in the list, to select a first un-updated candidate having not yet been updated in acoustic score (S408). Note that the determination whether or not the acoustic score has been updated is made depending on whether a fixed-phrase end time and a phrase-candidate end time are coincident or not. In the list 610, "by me" was selected.

Then, an acoustic score on "by me" is computed using a time 503 ms or its around taken as a beginning point (S409). As a result of acoustic matching, "-12" comparatively high in acoustic score was obtained, by Formula (1), in an utterance section having a beginning time 503 ms and end time 710 ms (list 612).

The representative method of such acoustic matching includes the processes of utterance-signal A/D conversion, conversion into the acoustic features, computation on an acoustic score referring to the acoustic model and cumulative computation of the acoustic score by DP matching. These processes can be dispersed with a collective process in the utterance input in step S301 and a sequential process in the acoustic score computation in step S409. The collective process prevents duplicated computation and hence advantageous in respect of process amount. The sequential process does not require to save a result in the course of processing and hence advantageous in respect of storage capacity. How to disperse is to be determined depending upon an actual configuration of hardware. In this embodiment, the computation on an acoustic score referrng to the acoustic model and the cumulative computation process for the acoustic score due to DP matching were carried out in Step S409.

Next, the word-string preparing section 106 updated the phrase candidate values. Namely, the acoustic score was updated to "-12" to determine a sum of the language score and the acoustic score, thereby updating the integration score. The phrase-candidate end time was updated with reference to a matching section (S410). As a result, a new candidate was given as in a list 613.

Next, the phrase candidate list is updated. Namely, the word-string preparing section 106 deletes the acoustic-score-pre-update candidate 611 from the phrase candidate list 610. Then, the word-string preparing section 106 adds the post-update candidate 613 to the phrase candidate list 610. Then, the list is rearranged in the order of higher integration score (S411). As a result, a phrase candidate list 620 was obtained. The above process is referred to as an acoustic score updating process.

Next, the word-string preparing section 106 carries out an end determination. In this embodiment, ending was made when the acoustic score updating process was made 100 rounds as a predetermined number of times (S412). Where less than 100 rounds, ending is not to be made for return to step S408. In this manner, by continuing the acoustic score updating process, prepared was a list of phrase candidates high in use frequency and in acoustic matching score with utterance. This list has phrase candidates arranged in the order of higher score.

Note that, the end determination can end the process when the number of the phrase candidates the end time is different from the fixation time reaches a predetermined value as counted from the top-ranked integration score.

The text input apparatus displays the phrase candidate list obtained as above, staring from the top-ranked phrase candidate. Due to this, the text input apparatus satisfactorily carries out a speech recognition process specified on a relevant subject of phrase at the present time, thereby enabling text input with reduced process amount and storage capacity. Also, one or more upper-ranked candidates can be displayed in the order of higher integration score, thereby reducing the number of candidates presented for the user to obtain a desired candidate. Furthermore, candidates are displayed phrase by phrase, thus providing a selection presentation easy for the user to grasp.

2nd Exemplary Embodiment

This embodiment is different from Embodiment 1 in that the extension process and the acoustic score updating process in the word-string preparing section 106 are carried out by updating the phrase candidate list in a concurrent fashion. The other block configuration diagram, man-machine interface and the like of the text input apparatus are the same as those of Embodiment 1.

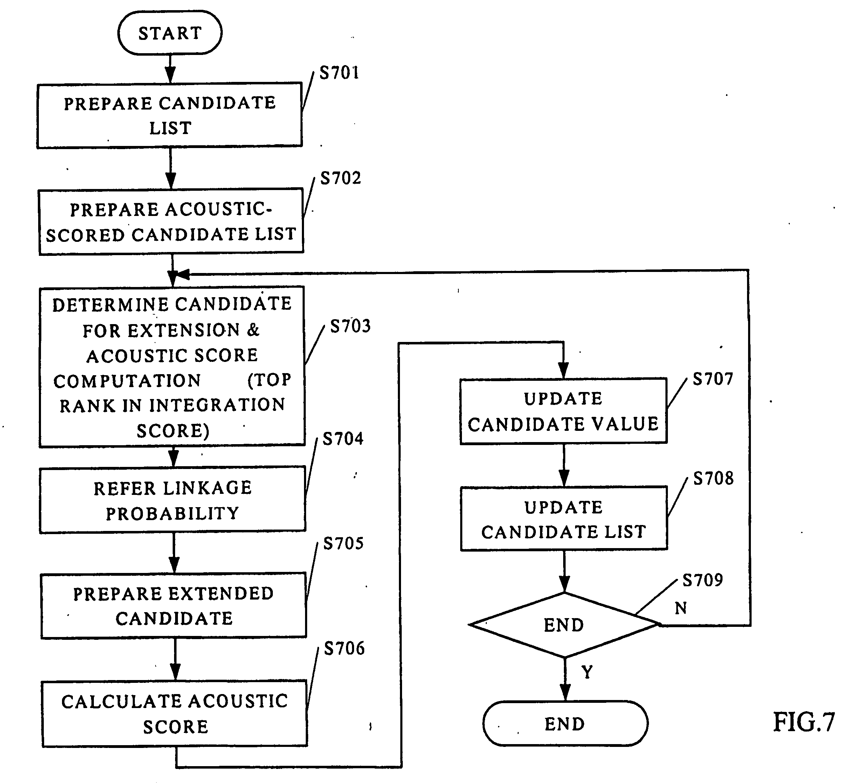

Fig. 7 is a flowchart showing a procedure of a phrase candidate preparing process by the text input apparatus according to Embodiment 2 of the invention.

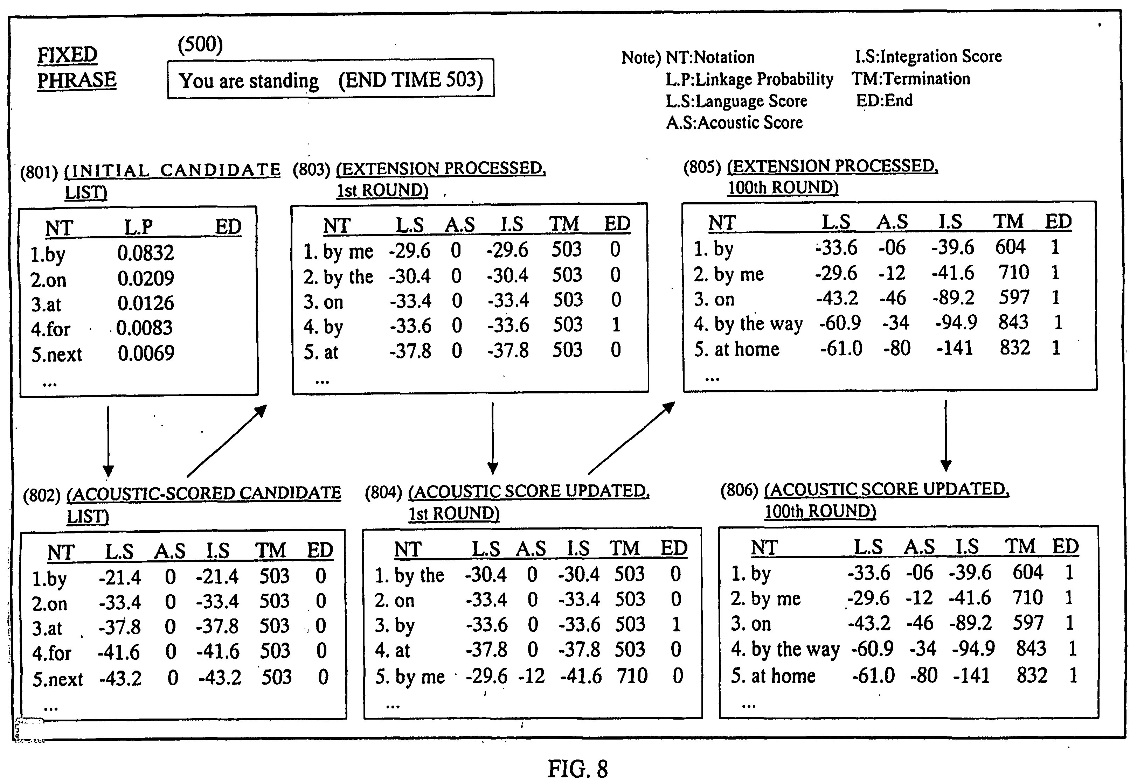

Fig. 8 shows a flow of the process data of upon preparing a list of the phrase candidates to be connected following a fixed phrase "You are standing" 500 by alternately repeating the extension and acoustic-score processes.

Explanation will be concretely made below using Fig. 7 and Fig. 8.

At first, the step S701, for preparing a list of the phrase candidates 801 to be connected following the fixed phrase "You are standing" 500, is the same as the step S401 of Embodiment 1. Then, the language score obtained by logarithmically processing the linkage probability of the candidate list 801 is added with an acoustic score to determine an integration score, thereby preparing a acoustic-scored candidate list 802 (S702). Next, an un-extended candidate is searched for in the order of from the top ranking of the acoustic-scored candidate list. Thus, a first candidate is obtained as an extension-processing candidate (S703). In the list 802, the candidate is given "by". For this candidate, "me", "the" and "($)" that are comparatively great in linkage probability are determined from "by" with using a language model, similarly to S407 (S704). These phrase candidates are added into the candidate list 802 similarly to Embodiment 1. The list is rearranged in the order of higher integration score, thereby obtaining new phrase candidates 803 (S705).

Next, the candidate having an end time same as the end time of the fixed phrase candidate is searched for in the order of from the top ranking in the candidate list, to determine an acoustic score on a first candidate (S706). In the list 803, "by me" corresponds to that. Determining an acoustic score for this candidate in a manner similar to S409, obtained was "-12" comparatively high in acoustic score in an utterance section having a beginning time 503 ms and end time 710 ms. This is reflected in the phrase candidate list 803 (S707). The list was rearranged in the order of higher integration score, thus obtaining phrase candidates 804 (S708). The process of steps S703 to S708 was repeated a previously set number of times, to obtain a phrase candidate list 806. In this embodiment, repetition was 100 in the number of times. In this embodiment, the result was obtained the same as the result of Embodiment 1.

Incidentally, the end determination of this embodiment can end the process when the extension and acoustic score processes is repeated a predetermined number of times. However, it is possible to determine an end when the number of phrase candidates the extension end flag is set at 1' reaches a predetermined value as counted from the top ranking.

Also, the end determination can also end the process when the number of phrase candidates the end time is different from the fixation time reaches a predetermined value as counted from the top-ranked integration score.

Otherwise, the end determination can be carried out by one, which is earlier in ending, of the method using an extension end flag as in the foregoing or the method using an end time.

3rd Exemplary Embodiment

This embodiment is different from Embodiment 1 in that the extension and acoustic score processes in the word-string preparing section are carried out in the order reverse to Embodiment 1. The other block configuration diagram, man-machine interface and the like of the text input apparatus are the same as those of Embodiment 1.

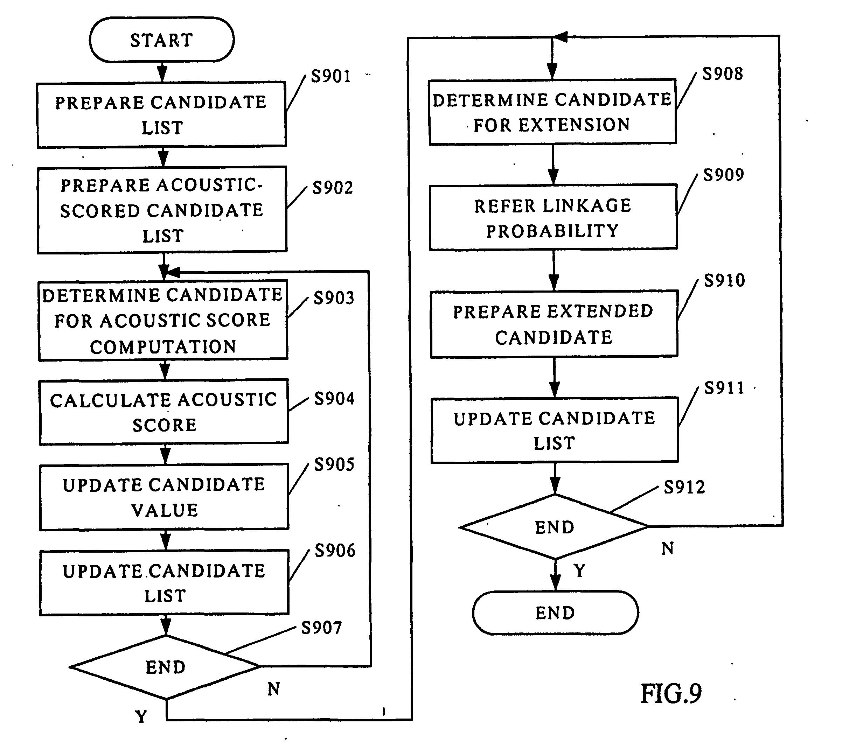

Fig. 9 is a flowchart showing a procedure of a phrase candidate preparing process by a text input apparatus according to Embodiment 3 of the invention.

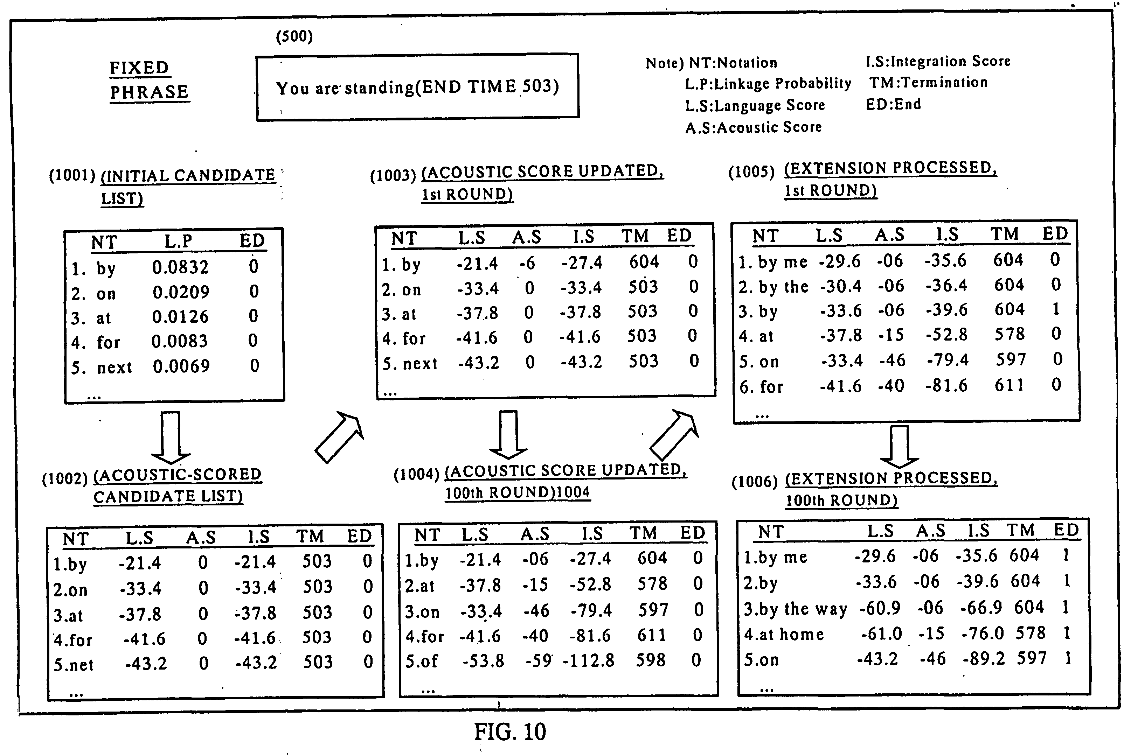

Fig. 10 shows a flow of the process data of upon preparing a list of phrase candidates to be connected following a fixed phrase "You are standing" 500 by carrying out an extension process after completing an acoustic score process.

Explanation will be concretely made below using Fig. 9 and Fig. 10.

At first, the step S901, for preparing a list of phrase candidates 1001 to be connected following a fixed phrase "You are standing" 500, is the same as the step S401 of Embodiment 1. Next, the language score obtained by logarithmically processing the linkage probability of the candidate list is added with an acoustic score to determine an integration score, thereby preparing temporary-acoustic-scored candidate list 1002 (S902). Then, search is made for a candidate having an end time different from an end time 503 of the fixed phrase candidate, in the order of from the top ranking in the candidate list 1002. Due to this, a first candidate is determined as an acoustic score computing candidate (S903). An acoustic score for this candidate is computed similarly to step S409 (S904). In the list 1002, "by" was selected. Computing an acoustic score, obtained was "-6" comparatively high in acoustic score in the utterance section having a beginning time 503 ms and end time 604 ms (S904). This was reflected in the phrase candidate list 1002 (S905). The list was rearranged in the order of higher integration core, thereby obtaining new phrase candidates 1003 (S906). The process of steps S903 to S906 was repeated a previously set number of times (S907). In this embodiment, repetition was 100 in the number of times, thus obtaining a candidate list 104.

Next, a language model is used for this candidate list 1004 to carry out an extension process. At first, selection is made for a first candidate the extension end flag is not set at '1', in the order of from the top ranking in the candidate list 1004 (S908).

Then, reference is made to a linkage probability for the language model (S909). Similarly to step S403, "me" , "the" and "($)" that are comparatively great in linkage probability are determined from "by" (S910).

These phrase candidates are added to the candidate list 1004 similarly to Embodiment 1. The list is rearranged in the order of higher integration score, thereby obtaining new phrase candidates 1005 (S911).

The process of the steps S908 to S911 was repeated 100 times previously set (S912), to obtain phrase candidate 1006. Because the acoustic score uses only a first morpheme value, the above result differs from that of Embodiment 1 or Embodiment 2. However, the similar phrases were obtained in the upper ranking.

Incidentally, in this embodiment, the end determination in the acoustic score updating process ended the process by the repetition of the update process a predetermined number of times. It is, however, possible to end the process when the number of phrase candidates the end time is different from the fixation time reaches a predetermined value as counted from the top-ranked integration score.

Also, the end determination in the extension process can end the process when the number of phrase candidates the extension end flag is set at '1' reaches a predetermined value as counted from the top ranking.

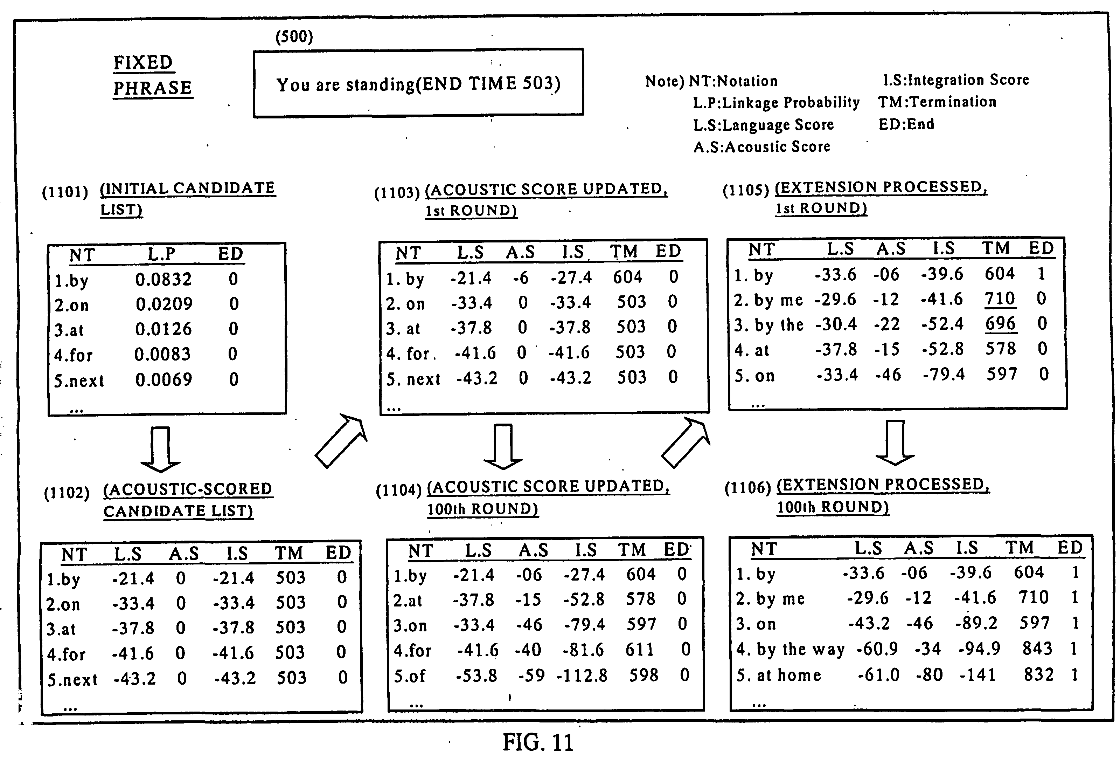

In Fig. 11, extension process is carried out after completing acoustic score updating process similarly to Fig. 10. However, this process data example differs from Fig. 10 in that, in the extension process, extended candidates have been prepared in step 910 and thereafter the acoustic score for the linked morpheme has been calculated and added to the pre-extension acoustic score.

In a candidate list 1105 of Fig. 11, "by me" and "by the" are updated in end time respectively to "710" and "696". In this manner, it is preferred to update acoustic score together with an extension process because of correctly determining acoustic score for the phrase candidate.

Incidentally, Embodiments 1 to 3 explained on the example that a phrase candidate list is prepared and a candidate is fixed by the input through the fix button and thereafter a next phrase candidate is prepared. However, in order to reduce the time of from fixing a candidate by the user to display of the next phrase candidate, it is possible, in a time point of displaying a candidate, to use the candidate to prepare a next phrase candidate. Otherwise, where desired one is absent in candidate-list display, the VOICE button can be again pressed to utter only the phrase to be recognized thereby making the apparatus re-prepare a candidate.

As described in the above, according to the present invention, the user is allowed to carry out a word-or-phrase-based search process on the one-or-more-sentence-based input utterance to sequentially select and fix candidates from the beginning of a sentence. Due to this, an advantageous effect is obtained of realizing text input while securing the both of apparatus size reduction and relief from utterance-input troublesomeness.

**Claims**

1. A method for inputting a text **characterized in that** it comprises:

   (a) a step of inputting a sentence by utterance;
   (b) a step of determining candidates of word-strings which consist of one or more words by speech recognition processing of the inputted utterance;
   (c) a step of displaying the candidates; and
   (d) a step of receiving a displayed candidate selected by a user; whereby the inputted utterance is recognized by which said candidate determining step (b), said displaying step (c) and said selecting step (d) are repeated in order on the basis of the selected candidate starting from a beginning of the inputted utterance.

2. A method for inputting a text according to claim 1, wherein said candidate determining step (b) determines a word-string on the basis of a language information and an acoustic information of the selected word-strings when there are pre-selected word-strings.

3. A method for inputting a text according to claim 1 or 2, wherein said word-strings is a phrase built by an extension process to repeat word linking according to a word-based linkage probability on said candidate determining step (b).

4. A method for inputting a text according to claim 3, wherein said candidate determining step (b) further having a process to update the candidate due to an acoustic score.

5. A method for inputting a text according to claim 4, wherein said extension process is ended by reaching of the number of phrase candidates subjected to said extension process a predetermined number as counted from a top rank in a language score.

6. An apparatus for inputting a text **characterized in that** it comprises:

   an input section (101) for inputting an utterance;
   an utterance pre-processing section (102) for extracting a feature amount of the utterance of said input section;

a word candidate preparing section (103) for preparing a following word candidate from a fixed word-string by using a language model;

a word-string preparing section (106) for preparing word-string candidates based on one to several words from the extracted feature amount and the word candidate by using at least any one of a language model (104) and an acoustic model (105);

a display section (107) for displaying the word-string candidates;

an operating section (108) for receiving a user selected word-string candidate being displayed; and

a candidate-preparation instructing section (109) for instructing said word candidate preparing section (103) to prepare a following word candidate from the word-string selected by the user.

7. An apparatus for inputting a text according to claim 6, wherein said word-string preparing section prepares a phrase-based candidate by an extension process to repeat word linking according to word-based linkage probability.

8. An apparatus for inputting a text according to claim 7, wherein said word-string preparing section further having an updating process due to an acoustic score.

9. An apparatus for inputting a text according to claim 8, wherein said word-string preparing section ends the extension process by reaching of the number of phrase candidate subjected to the extension process a predetermined number as counted from a top rank in a language score.

10. A cellular telephone having a text input apparatus according to claim 6.

11. A cellular telephone having a text input apparatus according to claim 7.

12. A cellular telephone having a text input apparatus according to claim 8.

13. A cellular telephone having a text input apparatus according to claim 9.

14. A storage medium for providing a program adapted to cause a computer to carry out the method for inputting a text according to claim 1.

15. A storage medium for providing a program according to claim 14, wherein said candidate determining step (b) further having a process to update the candidate due to an acoustic score.

16. A storage medium for providing a program according to claim 15, wherein said extension process is ended by reaching of the number of phrase candidates subjected to said extension process a predetermined number as counted from a top rank in a language score.

17. A computer program product for causing a computer to implement the method for inputting a text set forth in claim 1 when said computer program product is loaded in said computer.

18. A computer program product according to claim 17, wherein said candidate determining step (b) further having a process to update the candidate due to an acoustic score.

19. A computer program product according to claim 18, wherein said extension process is ended by reaching of the number of phrase candidates subjected to said extension process a predetermined number as counted from a top rank in a language score.

**Patentansprüche**

1. Verfahren zur Texteingabe, **dadurch gekennzeichnet, dass** es umfasst:

a) einen Schritt, einen Satz durch Sprechen einzugeben;
b) einen Schritt, durch Prozesse der Spracherkennung der eingegebenen Sprechäusserung Wortkettenkandidaten zu finden, die aus einem oder mehreren Wörtern bestehen;
c) einen Schritt, die Kandidaten anzuzeigen; und

d) einen Schritt, einen angezeigten und durch einen Benutzer ausgewählten Kandidaten entgegenzunehmen; wobei die eingegebene Sprechäusserung erkannt wird, für die der Kandidatenfindungsschritt (b), der Anzeigeschritt (c) und der Auswahlschritt (d) auf der Grundlage des ausgewählten Kandidaten der Reihe nach vom Anfang der eingegebenen Sprechäusserung an wiederholt werden.

2. Verfahren zur Texteingabe nach Anspruch 1, **dadurch gekennzeichnet, dass** der Kandidatenfindungsschritt (b) eine Wortkette auf der Grundlage von Sprachinformation und akustischer Information für die ausgewählten Wortketten findet, wenn im Voraus ausgewählte Wortketten vorhanden sind.

3. Verfahren zur Texteingabe nach Anspruch 1 oder 2, **dadurch gekennzeichnet, dass** die Wortketten ein Satz sind, der durch einen Erweiterungsprozess aufgebaut wurde, um die Wortverknüpfung in Übereinstimmung mit einer auf Wörtern beruhenden Verknüpfungswahrscheinlichkeit im Kandidatenfindungsschritt (b) zu wiederholen.

4. Verfahren zur Texteingabe nach Anspruch 3, **dadurch gekennzeichnet, dass** der Kandidatenfindungschritt (b) weiter einen Prozess beinhaltet, den Kandidaten durch ein akustisches Bewertungsergebnis zu aktualisieren.

5. Verfahren zur Texteingabe nach Anspruch 4, **dadurch gekennzeichnet, dass** der Erweiterungsprozess beendet wird, wenn die Anzahl von Satzkandidaten, die dem Erweiterungsprozess unterworfen worden sind, eine vorbestimmte Anzahl erreicht, die vom Spitzenplatz in einem Sprachbewertungsergebnis aus gezählt wird.

6. Vorrichtung zur Texteingabe, **dadurch gekennzeichnet, dass** sie umfasst:

einen Eingabeabschnitt (101) zur Eingabe einer Sprechäusserung;
einen Abschnitt (102) zur Vorverarbeitung der Sprechäusserung, um für die Sprechäusserung eine Merkmalssumme aus dem Eingabeabschnitt herauszuziehen;
einen Abschnitt (103) zur Vorbereitung von Wortkandidaten, um unter Verwendung eines Sprachmodells einen Folgewortkandidaten für eine festgelegte Wortkette vorzubereiten;
einen Abschnitt (106) zur Wortkettenvorbereitung, um auf der Basis von einem bis mehreren Wörtern aus der herausgezogenen Merkmalssumme und aus dem Wortkandidaten Wortkettenkandidaten vorzubereiten, indem zumindest entweder ein Sprachmodell (104) oder ein akustisches Modell (105) verwendet wird;
einen Anzeigeabschnitt (107) zur Anzeige der Wortkettenkandidaten;
einen Betriebsabschnitt (108) für die Entgegennahme der Benutzerauswahl eines angezeigten Wortkettenkandidaten; und
einen Abschnitt (109) zur Kandidatenvorbereitungsbeauftragung, um den Wortkandidatenvorbereitungsabschnitt (103) zu beauftragen, aus der durch den Benutzer ausgewählten Wortkette einen Folgewortkandidaten vorzubereiten.

7. Vorrichtung zur Texteingabe nach Anspruch 6, **dadurch gekennzeichnet, dass** der Wortkettenvorbereitungsabschnitt durch einen Erweiterungsprozess, der die Wortverknüpfung in Übereinstimmung mit der auf Wörtern beruhenden Verknüpfungswahrscheinlichkeit wiederholt, einen auf Sätzen beruhenden Kandidaten vorbereitet.

8. Vorrichtung zur Texteingabe nach Anspruch 7, **dadurch gekennzeichnet, dass** der Wortkettenvorbereitungsabschnitt weiter einen Aktualisierungsprozess beinhaltet, der auf einem akustischen Bewertungsergebnis beruht.

9. Vorrichtung zur Texteingabe nach Anspruch 8, **dadurch gekennzeichnet, dass** der Wortkettenvorbereitungsabschnitt den Erweiterungsprozess beendet, wenn die Anzahl von Satzkandidaten, die dem Erweiterungsprozess unterworfen worden sind, eine vorbestimmte Anzahl erreicht, die vom Spitzenplatz in einem Sprachbewertungsergebnis aus gezählt wird.

10. Mobiltelefon, das eine Texteingabevorrichtung nach Anspruch 6 besitzt.

11. Mobiltelefon, das eine Texteingabevorrichtung nach Anspruch 7 besitzt.

12. Mobiltelefon, das eine Texteingabevorrichtung nach Anspruch 8 besitzt.

13. Mobiltelefon, das eine Texteingabevorrichtung nach Anspruch 9 besitzt.

14. Speichermedium, um ein Programm zur Verfügung zu stellen, das dafür geeignet ist, einen Computer zu veranlassen, das Verfahren zur Texteingabe nach Anspruch 1 durchzuführen.

15. Speichermedium, um ein Programm gemäss Anspruch 14 zur Verfügung zu stellen, **dadurch gekennzeichnet, dass** der Kandidatenfindungsschritt (b) weiter einen Prozess beinhaltet, den Kandidaten auf Grund eines akustischen Bewertungsergebnisses zu aktualisieren.

16. Speichermedium, um ein Programm gemäss Anspruch 15 zur Verfügung zu stellen, **dadurch gekennzeichnet, dass** der Erweiterungsprozess beendet wird, wenn die Anzahl von Satzkandidaten, die dem Erweiterungsprozess unterworfen worden sind, eine vorbestimmte Anzahl erreicht, die vom Spitzenplatz in einem Sprachbewertungsergebnis aus gezählt wird.

17. Computerprogrammprodukt, um einen Computer zu veranlassen, das in Anspruch 1 vorgestellte Verfahren zur Texteingabe zu implementieren, wenn das Computerprogrammprodukt in den Computer geladen wird.

18. Computerprogrammprodukt nach Anspruch 17, **dadurch gekennzeichnet, dass** der Kandidatenfindungsschritt (b) weiter einen Prozess beinhaltet, den Kandidaten durch ein akustisches Bewertungsergebnis zu aktualisieren.

19. Computerprogrammprodukt nach Anspruch 18, **dadurch gekennzeichnet, dass** der Erweiterungsprozess beendet wird, wenn die Anzahl von Satzkandidaten, die dem Erweiterungsprozess unterworfen worden sind, eine vorbestimmte Anzahl erreicht, die vom Spitzenplatz in einem Sprachbewertungsergebnis aus gezählt wird.


**Revendications**

1. Procédé destiné à saisir un texte **caractérisé en ce qu'**il comprend :

   (a) une étape consistant à appliquer en entrée une phrase par prononciation,
   (b) une étape consistant à déterminer des candidats de chaînes de mots qui consistent en un ou plusieurs mots par un traitement de reconnaissance de la parole de la prononciation appliquée en entrée,
   (c) une étape consistant à afficher les candidats, et
   (d) une étape consistant à recevoir un candidat affiché sélectionné par un utilisateur, grâce à quoi la prononciation appliquée en entrée est reconnue, où ladite étape de détermination de candidats (b), ladite étape d'affichage (c) et ladite étape de sélection (d) sont répétées dans l'ordre sur la base du candidat sélectionné en partant depuis le début de la prononciation appliquée en entrée.

2. Procédé destiné à saisir un texte selon la revendication 1, dans lequel ladite étape de détermination de candidats (b) détermine une chaîne de mots sur la base d'informations de langue et d'informations acoustiques des chaînes de mots sélectionnées lorsqu'il y a des chaînes de mots présélectionnées.

3. Procédé destiné à saisir un texte selon la revendication 1 ou 2, dans lequel lesdites chaînes de mots constituent une locution conçue par un processus d'extension pour répéter un enchaînement de mots conformément à une probabilité d'enchaînement fondée sur des mots sur ladite étape de détermination de candidats (b).

4. Procédé destiné à saisir un texte selon la revendication 3, dans lequel ladite étape de détermination de candidats (b) comporte en outre un procédé pour mettre à jour le candidat du fait d'une notation acoustique.

5. Procédé destiné à saisir un texte selon la revendication 4, dans lequel ledit processus d'extension prend fin en atteignant le nombre de locutions candidates soumises audit processus d'extension un nombre prédéterminé de fois tel que compté à partir d'un rang supérieur dans une notation pour la langue.

6. Dispositif destiné à saisir un texte **caractérisé en ce qu'**il comprend :

   une section d'entrée (101) destinée à appliquer en entrée une prononciation,
   une section de prétraitement de prononciation (102) destinée à extraire une partie caractéristique de la prononciation de ladite section d'entrée,
   une section de préparation de mot candidat (103) destinée à préparer un mot candidat qui suit à partir d'une chaîne de mots fixe en utilisant un modèle de langue,
   une section de préparation de chaîne de mots (106) destinée à préparer des chaînes de mots candidates en se fondant sur un à plusieurs mots de la partie caractéristique extraite et le mot candidat en utilisant au moins l'un quelconque d'un modèle de langue (104) et d'un modèle acoustique (105),
une section d'affichage (107) destinée à afficher les chaînes de mots candidates,
une section de mise en oeuvre (108) destinée à recevoir une chaîne de mots candidate sélectionnée par un utilisateur qui est affichée, et
une section d'instruction de préparation de candidat (109) destinée à donner pour instruction à ladite section de préparation de mot candidat (103) de préparer un mot candidat qui suit d'après la chaîne de mots sélectionnée par l'utilisateur.

7. Dispositif destiné à saisir un texte selon la revendication 6, dans lequel ladite section de préparation de chaîne de mots prépare un candidat de type locution par un processus d'extension pour répéter un enchaînement de mots conformément à une probabilité d'enchaînement fondée sur les mots.

8. Dispositif destiné à saisir un texte selon la revendication 7, dans lequel ladite section de préparation de chaîne de mots comporte en outre un procédé de mise à jour du fait d'une notation acoustique.

9. Dispositif destiné à saisir un texte selon la revendication 8, dans lequel ladite section de préparation de chaîne de mots met fin au processus d'extension en atteignant le nombre de locutions candidates soumises au processus d'extension, un nombre prédéterminé de fois tel que compté depuis un rang supérieur dans une notation pour langue.

10. Téléphone cellulaire comportant un dispositif de saisie de texte selon la revendication 6.

11. Téléphone cellulaire comportant un dispositif de saisie de texte selon la revendication 7.

12. Téléphone cellulaire comportant un dispositif de saisie de texte selon la revendication 8.

13. Téléphone cellulaire comportant un dispositif de saisie de texte selon la revendication 9.

14. Support de mémorisation destiné à fournir un programme conçu pour amener un ordinateur à exécuter le procédé consistant à saisir un texte selon la revendication 1.

15. Support de mémorisation destiné à fournir un programme selon la revendication 14, dans lequel ladite étape de détermination de candidats (b) comporte en outre un procédé pour mettre en jour le candidat du fait d'une notation acoustique.

16. Support de mémorisation destiné à fournir un programme selon la revendication 15, dans lequel ledit processus d'extension prend fin en atteignant le nombre de locutions candidates soumises audit processus d'extension un nombre prédéterminé de fois tel que compté à partir d'un rang supérieur dans une notation pour langue.

17. Produit de programme informatique destiné à amener un ordinateur à mettre en oeuvre le procédé destiné à saisir un texte selon la revendication 1, lorsque ledit produit de programme informatique est chargé dans ledit ordinateur.

18. Produit de programme informatique selon la revendication 17, dans lequel ladite étape de détermination de candidats (b) comporte en outre un procédé pour mettre à jour le candidat du fait d'une notation acoustique.

19. Produit de programme informatique selon la revendication 18, dans lequel ledit processus d'extension prend fin en atteignant le nombre de locutions candidates soumises audit processus d'extension un nombre prédéterminé de fois tel que compté à partir d'un rang supérieur dans une notation pour langue.

FIG.1

FIG.2

EP 1 209 659 B1

EP 1 209 659 B1

```
                    ┌─────────────┐
                    │    START    │
                    └──────┬──────┘
                           │
                           ▼
S301          ┌──────────────────────────┐
              │     INPUT UTTERANCE      │
              └────────────┬─────────────┘
                           │
                           ▼ ◄──────────────┐
S302          ┌──────────────────────────┐ │
              │     REQUEST PHRASE        │ │
              │   CANDIDATE DISPLAY       │ │
              └────────────┬─────────────┘ │
                           │               │
                           ▼               │
S303          ┌──────────────────────────┐ │
              │        PREPARE/           │ │
              │   DISPLAY CANDIDATE       │ │
              └────────────┬─────────────┘ │
                           │               │
                           ▼               │
S304          ┌──────────────────────────┐ │
              │        SELECT/            │ │
              │      FIX PHRASE           │ │
              └────────────┬─────────────┘ │
                           │               │
                           ▼            N  │
S305              ◇───────────────◇────────┘
                   \    END?     /
                    ◇───────────◇
                           │ Y
                           ▼
                    ┌─────────────┐
                    │     END     │
                    └─────────────┘
```

FIG. 3

```
                START
                  │
                  ▼
        ┌──────────────────┐      S401
        │ PREPARE CANDIDATE │
        │      LIST         │
        └──────────────────┘
                  │
                  ▼◄─────────────┐
        ┌──────────────────┐      S402
        │ DETERMINE CANDIDATE│
        │  FOR EXTENSION    │
        └──────────────────┘
                  │
                  ▼
        ┌──────────────────┐      S403
        │  REFER LINKAGE    │
        │  PROBABILITY      │
        └──────────────────┘
                  │
                  ▼
        ┌──────────────────┐      S404
        │ PREPARE EXTENDED  │
        │   CANDIDATE       │
        └──────────────────┘
                  │
                  ▼
        ┌──────────────────┐      S405
        │ UPDATE CANDIDATE  │
        │      LIST         │
        └──────────────────┘
                  │
                  ▼
              ◇ END ◇───N──────────┘     S406
                  │
                  Y
```

```
                  ┌──────────────────────┐
                  ▼                        │
        ┌──────────────────┐      S407     │
        │ PREPARE ACOUSTIC- │              │
        │SCORED CANDIDATE LIST│            │
        └──────────────────┘              │
                  │◄────────────────┐      │
                  ▼                  │      │
        ┌──────────────────┐  S408   │      │
        │ DETERMINE CANDIDATE│        │      │
        │ FOR ACOUSTIC SCORE │        │      │
        │   CALCULATION     │        │      │
        └──────────────────┘        │      │
                  │                  │      │
                  ▼                  │      │
        ┌──────────────────┐  S409   │      │
        │ CALCULATE ACOUSTIC│        │      │
        │      SCORE        │        │      │
        └──────────────────┘        │      │
                  │                  │      │
                  ▼                  │      │
        ┌──────────────────┐  S410   │      │
        │ UPDATE CANDIDATE  │        │      │
        │      VALUE        │        │      │
        └──────────────────┘        │      │
                  │                  │      │
                  ▼                  │      │
        ┌──────────────────┐  S411   │      │
        │ UPDATE CANDIDATE LIST│     │      │
        └──────────────────┘        │      │
                  │                  │      │
                  ▼              S412 │      │
              ◇ END ◇───N─────────────┘      │
                  │
                  Y
                  ▼
               ( END )
```

FIG.4

EP 1 209 659 B1

**(500)**

FIXED PHRASE

| You are standing |
| --- |

**(510)** (EXTENSION PROCESSED, 0th ROUND)

**(520)** (EXTENSION PROCESSED, 1st ROUND)

**(530)** (EXTENSION PROCESSED, 100th ROUND)

PHRASE CANDIDATE LIST

| NT | L.P | ED |
| --- | --- | --- |
| 1.by | 0.0832 | 0 |
| 2.on | 0.0209 | 0 |
| 3.at | 0.0126 | 0 |
| 4.for | 0.0083 | 0 |
| 5.next | 0.0069 | 0 |
| ... | | |

| NT | L.P | ED |
| --- | --- | --- |
| 1. by me | 0.0324 | 0 |
| 2. by the | 0.0299 | 0 |
| 3. on | 0.0209 | 0 |
| 4. by | 0.0208 | 1 |
| 5. at | 0.0126 | 0 |
| ... | | |

| NT | L.P | ED |
| --- | --- | --- |
| 1. by me | 0.0324 | 1 |
| 2. by | 0.0208 | 1 |
| 3. on | 0.0068 | 1 |
| 4. by the way | 0.00089 | 1 |
| 5. at home | 0.00088 | 1 |
| ... | | |

SELECT

**(511)**

PRE-EXTENSION CANDIDATE

| NT | L.P | ED |
| --- | --- | --- |
| by | 0.0832 | 0 |

**(521)**

| NT | L.P | ED |
| --- | --- | --- |
| by me | 0.0324 | 0 |

**(512)**

LINKAGE PROBABILITY TO EXTENSION

| NT | L.P |
| --- | --- |
| by -> me | 0.39 |
| by -> the | 0.36 |
| by -> $ | 0.25 |

**(522)**

| NT | L.P |
| --- | --- |
| by me -> $ | 1.00 |

**(513)**

POST-EXTENSION CANDIDATE

| NT | L.P | ED |
| --- | --- | --- |
| by me | 0.0324 | 0 |
| by the | 0.0299 | 0 |
| by $ | 0.0208 | 1 |

**(523)**

| NT | L.P | ED |
| --- | --- | --- |
| by me | 0.0324 | 1 |

Note) NT:Notation
L.P:Linkage Probability
L.S:Language Score
A.S:Acoustic Score
I.S:Integration Score
TM:Termination
ED:End

FIG. 5

FIXED
PHRASE

(600)

| You are standing (END TIME 503) |

(610) (ACOUSTIC SCORE UPDATED, 0th ROUND)

PHRASE
CANDIDAT
E LIST

| NT | L.S | A.S | I.S | ED |
|---|---|---|---|---|
| 1.by me | -29.6 | 0 | -29.6 | 503 |
| 2.by | -33.6 | 0 | - 33.6 | 503 |
| 3.on | -43.2 | 0 | -43.2 | 503 |
| 4.by the way | -60.9 | 0 | -60.9 | 503 |
| 5.at home | -61.0 | 0 | -61.0 | 503 |
| ... | | | | |

SELECT

(620) (ACOUSTIC SCORE UPDATED, 1st ROUND)

| NT | L.S | A.S | I.S | ED |
|---|---|---|---|---|
| 1.by | -33.6 | 0 | -33.6 | 503 |
| 2.by me | -29.6 | -12 | -41.6 | 710 |
| 3.on | -43.2 | 0 | -43.2 | 503 |
| 4.by the way | -60.9 | 0 | -60.9 | 503 |
| 5.at home | -61.0 | 0 | -61.0 | 503 |
| ... | | | | |

(611)

ACOUSTIC
SCORE
PRE-UPDATE
CANDIDATE

| NT | L.S | A.S | I.S | ED |
|---|---|---|---|---|
| 1.by me | -29.6 | 0 | -29.6 | 503 |

(612)

ACOUSTIC
SCORE

| NT | L.S | ST | ED |
|---|---|---|---|
| by me | -12 | 503 <-> 710 | |

Note) NT:Notation
L.P:Linkage Probability
L.S:Language Score
A.S:Acoustic Score
I.S:Integration Score
TM:Termination
ST:Start
ED:End

(613)

ACOUSTIC
SCORE POST-
UPDATE
CANDIDATE

| NT | L.S | A.S | I.S | ED |
|---|---|---|---|---|
| by me | -29.6 | -12 | -41.6 | 710 |

FIG. 6

START

PREPARE CANDIDATE
LIST — S701

PREPARE ACOUSTIC-
SCORED CANDIDATE LIST — S702

DETERMINE CANDIDATE
FOR EXTENSION &
ACOUSTIC SCORE
COMPUTATION      (TOP
RANK IN INTEGRATION
SCORE) — S703

REFER LINKAGE
PROBABILITY — S704

PREPARE EXTENDED
CANDIDATE — S705

CALCULATE ACOUSTIC
SCORE — S706

UPDATE
CANDIDATE VALUE — S707

UPDATE
CANDIDATE LIST — S708

END — S709

N

Y

END

FIG.7

Note) NT:Notation    I.S:Integration Score
L.P:Linkage Probability   TM:Termination
L.S:Language Score   ED:End
A.S:Acoustic Score

FIXED PHRASE   (500)   You are standing   (END TIME 503)

**(801) (INITIAL CANDIDATE LIST)**

| NT | L.P | ED |
|---|---|---|
| 1.by | 0.0832 | |
| 2.on | 0.0209 | |
| 3.at | 0.0126 | |
| 4.for | 0.0083 | |
| 5.next | 0.0069 | |
| ... | | |

**(802) (ACOUSTIC-SCORED CANDIDATE LIST)**

| NT | L.S | A.S | I.S | TM | ED |
|---|---|---|---|---|---|
| 1.by | -21.4 | 0 | -21.4 | 503 | 0 |
| 2.on | -33.4 | 0 | -33.4 | 503 | 0 |
| 3.at | -37.8 | 0 | -37.8 | 503 | 0 |
| 4.for | -41.6 | 0 | -41.6 | 503 | 0 |
| 5.next | -43.2 | 0 | -43.2 | 503 | 0 |
| ... | | | | | |

**(803) (EXTENSION PROCESSED 1st ROUND)**

| NT | L.S | A.S | I.S | TM | ED |
|---|---|---|---|---|---|
| 1. by me | -29.6 | 0 | -29.6 | 503 | 0 |
| 2. by the | -30.4 | 0 | -30.4 | 503 | 0 |
| 3. on | -33.4 | 0 | -33.4 | 503 | 0 |
| 4. by | -33.6 | 0 | -33.6 | 503 | 1 |
| 5. at | -37.8 | 0 | -37.8 | 503 | 0 |
| ... | | | | | |

**(804) (ACOUSTIC SCORE UPDATED 1st ROUND)**

| NT | L.S | A.S | I.S | TM | ED |
|---|---|---|---|---|---|
| 1. by the | -30.4 | 0 | -30.4 | 503 | 0 |
| 2. on | -33.4 | 0 | -33.4 | 503 | 0 |
| 3. by | -33.6 | 0 | -33.6 | 503 | 1 |
| 4. at | -37.8 | 0 | -37.8 | 503 | 0 |
| 5. by me | -29.6 | -12 | -41.6 | 710 | 0 |
| ... | | | | | |

**(805) (EXTENSION PROCESSED 100th ROUND)**

| NT | L.S | A.S | I.S | TM | ED |
|---|---|---|---|---|---|
| 1. by | -33.6 | -06 | -39.6 | 604 | 1 |
| 2. by me | -29.6 | -12 | -41.6 | 710 | 1 |
| 3. on | -43.2 | -46 | -89.2 | 597 | 1 |
| 4. by the way | -60.9 | -34 | -94.9 | 843 | 1 |
| 5. at home | -61.0 | -80 | -141 | 832 | 1 |
| ... | | | | | |

**(806) (ACOUSTIC SCORE UPDATED 100th ROUND)**

| NT | L.S | A.S | I.S | TM | ED |
|---|---|---|---|---|---|
| 1. by | -33.6 | -06 | -39.6 | 604 | 1 |
| 2. by me | -29.6 | -12 | -41.6 | 710 | 1 |
| 3. on | -43.2 | -46 | -89.2 | 597 | 1 |
| 4. by the way | -60.9 | -34 | -94.9 | 843 | 1 |
| 5. at home | -61.0 | -80 | -141 | 832 | 1 |
| ... | | | | | |

FIG. 8

20

START → PREPARE CANDIDATE LIST (S901) → PREPARE ACOUSTIC-SCORED CANDIDATE LIST (S902) → DETERMINE CANDIDATE FOR ACOUSTIC SCORE COMPUTATION (S903) → CALCULATE ACOUSTIC SCORE (S904) → UPDATE CANDIDATE VALUE (S905) → UPDATE CANDIDATE LIST (S906) → END (S907) — N → (loop back to S903); Y →

DETERMINE CANDIDATE FOR EXTENSION (S908) → REFER LINKAGE PROBABILITY (S909) → PREPARE EXTENDED CANDIDATE (S910) → UPDATE CANDIDATE LIST (S911) → END (S912) — N → (loop back to S908); Y → END

FIG.9

FIXED PHRASE

You are standing(END TIME 503) (500)

Note) NT:Notation  I.S:Integration Score
L.P:Linkage Probability  TM:Termination
L.S:Language Score  ED:End
A.S:Acoustic Score

**(1001) (INITIAL CANDIDATE LIST)**

| NT | L.P | ED |
|---|---|---|
| 1. by | 0.0832 | 0 |
| 2. on | 0.0209 | 0 |
| 3. at | 0.0126 | 0 |
| 4. for | 0.0083 | 0 |
| 5. next | 0.0069 | 0 |
| ... | | |

**(1003) (ACOUSTIC SCORE UPDATED, 1st ROUND)**

| NT | L.S | A.S | I.S | TM | ED |
|---|---|---|---|---|---|
| 1. by | -21.4 | -6 | -27.4 | 604 | 0 |
| 2. on | -33.4 | 0 | -33.4 | 503 | 0 |
| 3. at | -37.8 | 0 | -37.8 | 503 | 0 |
| 4. for | -41.6 | 0 | -41.6 | 503 | 0 |
| 5. next | -43.2 | 0 | -43.2 | 503 | 0 |
| ... | | | | | |

**(1005) (EXTENSION PROCESSED, 1st ROUND)**

| NT | L.S | A.S | I.S | TM | ED |
|---|---|---|---|---|---|
| 1. by me | -29.6 | -06 | -35.6 | 604 | 0 |
| 2. by the | -30.4 | -06 | -36.4 | 604 | 0 |
| 3. by | -33.6 | -06 | -39.6 | 604 | 1 |
| 4. at | -37.8 | -15 | -52.8 | 578 | 0 |
| 5. on | -33.4 | -46 | -79.4 | 597 | 0 |
| 6. for | -41.6 | -40 | -81.6 | 611 | 0 |
| ... | | | | | |

**(1002) (ACOUSTIC-SCORED CANDIDATE LIST)**

| NT | L.S | A.S | I.S | TM | ED |
|---|---|---|---|---|---|
| 1.by | -21.4 | 0 | -21.4 | 503 | 0 |
| 2.on | -33.4 | 0 | -33.4 | 503 | 0 |
| 3.at | -37.8 | 0 | -37.8 | 503 | 0 |
| 4.for | -41.6 | 0 | -41.6 | 503 | 0 |
| 5.net | -43.2 | 0 | -43.2 | 503 | 0 |
| ... | | | | | |

**(1004) (ACOUSTIC SCORE UPDATED, 100th ROUND)1004**

| NT | L.S | A.S | I.S | TM | ED |
|---|---|---|---|---|---|
| 1.by | -21.4 | -06 | -27.4 | 604 | 0 |
| 2.at | -37.8 | -15 | -52.8 | 578 | 0 |
| 3.on | -33.4 | -46 | -79.4 | 597 | 0 |
| 4.for | -41.6 | -40 | -81.6 | 611 | 0 |
| 5.of | -53.8 | -59 | -112.8 | 598 | 0 |
| ... | | | | | |

**(1006) (EXTENSION PROCESSED, 100th ROUND)**

| NT | L.S | A.S | I.S | TM | ED |
|---|---|---|---|---|---|
| 1.by me | -29.6 | -06 | -35.6 | 604 | 1 |
| 2.by | -33.6 | -06 | -39.6 | 604 | 1 |
| 3.by the way | -60.9 | -06 | -66.9 | 604 | 1 |
| 4.at home | -61.0 | -15 | -76.0 | 578 | 1 |
| 5.on | -43.2 | -46 | -89.2 | 597 | 1 |
| ... | | | | | |

**FIG. 10**

EP 1 209 659 B1

EP 1 209 659 B1

**FIXED PHRASE**

(500)

| You are standing(END TIME 503) |
|---|

Note) NT:Notation    I.S:Integration Score
L.P:Linkage Probability    TM:Termination
L.S:Language Score    ED:End
A.S:Acoustic Score

(1101) (INITIAL CANDIDATE LIST)

| NT | L.P | ED |
|---|---|---|
| 1.by | 0.0832 | 0 |
| 2.on | 0.0209 | 0 |
| 3.at | 0.0126 | 0 |
| 4.for | 0.0083 | 0 |
| 5.next | 0.0069 | 0 |
| ... | | |

(1103) (ACOUSTIC SCORE UPDATED, 1st ROUND)

| NT | L.S | A.S | I.S | TM | ED |
|---|---|---|---|---|---|
| 1. by | -21.4 | -6 | -27.4 | 604 | 0 |
| 2. on | -33.4 | 0 | -33.4 | 503 | 0 |
| 3. at | -37.8 | 0 | -37.8 | 503 | 0 |
| 4. for | -41.6 | 0 | -41.6 | 503 | 0 |
| 5. next | -43.2 | 0 | -43.2 | 503 | 0 |
| ... | | | | | |

(1105) (EXTENSION PROCESSED, 1st ROUND)

| NT | L.S | A.S | I.S | TM | ED |
|---|---|---|---|---|---|
| 1. by | -33.6 | -06 | -39.6 | 604 | 1 |
| 2. by me | -29.6 | -12 | -41.6 | 710 | 0 |
| 3. by the | -30.4 | -22 | -52.4 | 696 | 0 |
| 4. at | -37.8 | -15 | -52.8 | 578 | 0 |
| 5. on | -33.4 | -46 | -79.4 | 597 | 0 |
| ... | | | | | |

(1102) (ACOUSTIC-SCORED CANDIDATE LIST)

| NT | L.S | A.S | I.S | TM | ED |
|---|---|---|---|---|---|
| 1.by | -21.4 | 0 | -21.4 | 503 | 0 |
| 2.on | -33.4 | 0 | -33.4 | 503 | 0 |
| 3.at | -37.8 | 0 | -37.8 | 503 | 0 |
| 4.for | -41.6 | 0 | -41.6 | 503 | 0 |
| 5.next | -43.2 | 0 | -43.2 | 503 | 0 |
| ... | | | | | |

(1104) (ACOUSTIC SCORE UPDATED, 100th ROUND)

| NT | L.S | A.S | I.S | TM | ED |
|---|---|---|---|---|---|
| 1.by | -21.4 | -06 | -27.4 | 604 | 0 |
| 2.at | -37.8 | -15 | -52.8 | 578 | 0 |
| 3.on | -33.4 | -46 | -79.4 | 597 | 0 |
| 4.for | -41.6 | -40 | -81.6 | 611 | 0 |
| 5.of | -53.8 | -59 | -112.8 | 598 | 0 |
| ... | | | | | |

(1106) (EXTENSION PROCESSED, 100th ROUND)

| NT | L.S | A.S | I.S | TM | ED |
|---|---|---|---|---|---|
| 1. by | -33.6 | -06 | -39.6 | 604 | 1 |
| 2. by me | -29.6 | -12 | -41.6 | 710 | 1 |
| 3. on | -43.2 | -46 | -89.2 | 597 | 1 |
| 4. by the way | -60.9 | -34 | -94.9 | 843 | 1 |
| 5. at home | -61.0 | -80 | -141 | 832 | 1 |
| ... | | | | | |

FIG. 11

```
        ┌─────────────┐
        │    START    │
        └──────┬──────┘
               │
               ▼
    ┌─────────────────────┐
    │   INPUT UTTERANCE    │  S1201
    └──────────┬──────────┘
               │
               ▼
    ┌─────────────────────┐
    │    AUTO-SEARCH       │  S1202
    │    RESOLUTION        │
    └──────────┬──────────┘
               │
               ▼
    ┌─────────────────────┐
    │ DISPLAY RECOGNITION  │  S1203
    │      RESULT          │
    └──────────┬──────────┘
               │
               ▼
    ┌─────────────────────┐
    │ CORRECT ERRONEOUS    │  S1204
    │   RECOGNITION        │
    └──────────┬──────────┘
               │
               ▼
          ╱╲  S1205
         ╱    ╲
        ╱  END  ╲──── N
        ╲       ╱
         ╲    ╱
          ╲╱
          │ Y
          ▼
      ┌────────┐
      │  END   │
      └────────┘
```

PRIOR ART

FIG.12